# EUROPEAN PATENT APPLICATION

(11) **EP 4 776 600 A1**
(43) Date of publication of application: **15.07.2026**
(21) Application number: 25218019.5
(22) Date of filing: 24.11.2025
(51) Int. Cl.: H04L 69/00, A63F 13/23, G06F 13/42

(54) **COMMUNICATION SYSTEM, METHOD, AND ELECTRONIC DEVICE**

(30) Priority: 10.01.2025 JP 2025004358
(71) Applicant: Nintendo Co., Ltd., Kyoto-shi, Kyoto 601-8501 (JP)
(72) Inventor: NARUSE, Fumisato, Kyoto-shi, Kyoto, 601-8501 (JP); FUNAKOSHI, Takahiro, Kyoto-shi, Kyoto, 601-8501 (JP); KOBAYASHI, Masato, Kyoto-shi, Kyoto, 601-8501 (JP)
(74) Representative: Bardehle Pagenberg Partnerschaft mbB Patentanwälte Rechtsanwälte

(57) **Abstract**

A communication system includes a first electronic device configured to connect through a wired connection to another electronic device and a second electronic device configured to connect through a wired connection to the first electronic device. The first electronic device includes a determination unit configured to obtain a potential produced when the first electronic device is connected through the wired connection to the another electronic device and to determine a type of the another electronic device based on the obtained potential, a processing unit configured to prepare data including device information of the first electronic device based on determination that the another electronic device is the second electronic device and a request from the second electronic device, and a communication unit configured to start communication with the second electronic device after preparation of the data is completed and to allow the second electronic device to obtain the device information of the first electronic device. The second electronic device is configured to perform processing based on the device information of the first electronic device.

## Description

The present disclosure relates to a communication system, a method, and an electronic device.

### INTRODUCTION

An electronic information storage medium that enables reduction in communication time period has been known (for example, Japanese Patent Laying-Open No. 2019-168944).

### SUMMARY

Further reduction in time period of communication between electronic devices has been demanded.

(Configuration 1) An exemplary embodiment provides a communication system including a first electronic device configured to connect through a wired connection to another electronic device and a second electronic device configured to connect through a wired connection to the first electronic device. The first electronic device includes a determination unit that obtains a potential produced when the first electronic device is connected through the wired connection to the another electronic device and determines a type of the another electronic device based on the obtained potential, a processing unit that prepares data including device information of the first electronic device based on determination that the another electronic device is the second electronic device and a request from the second electronic device, and a communication unit that starts communication with the second electronic device after preparation of the data is completed and transmits the device information of the first electronic device to the second electronic device. The second electronic device performs processing based on the device information of the first electronic device.

(Configuration 2) In Configuration 1, the first electronic device may notify, after preparation of the data, the second electronic device of completion of the preparation of the data. Communication between the first electronic device and the second electronic device may be started after the first electronic device has notified the second electronic device of completion of the preparation of the data.

(Configuration 3) In Configuration 1 or 2, the first electronic device and the second electronic device may transmit or receive a signal adapted to communication via inter integrated circuit (I2C) through two signal lines.

(Configuration 4) In any of Configurations 1 to 3, the second electronic device may obtain the device information of the first electronic device by transmitting or receiving one command to or from the first electronic device.

(Configuration 5) In any of Configurations 1 to 4, the processing based on the device information of the first electronic device may include display processing based on the device information of the first electronic device.

(Configuration 6) In any of Configurations 1 to 5, the first electronic device may be a controller and the second electronic device may be a main body apparatus to which the controller is configured to be attached. The device information of the first electronic device may include information indicating a color of an appearance of the controller.

(Configuration 7) In any of Configurations 1 to 6, the device information of the first electronic device may include identification information of the controller. The second electronic device may show an image object corresponding to the appearance of the first electronic device based on the device information of the first electronic device.

(Configuration 8) In any of Configurations 1 to 7, the communication system may further include a third electronic device configured to connect through a wired connection to the first electronic device. Device information of the third electronic device may be stored in the third electronic device, and the first electronic device may obtain the device information of the third electronic device.

(Configuration 9) In any of Configurations 1 to 8, the first electronic device may determine that the first electronic device is connected to the third electronic device based on obtainment of the device information of the third electronic device when a difference between a potential produced when the first electronic device is connected through the wired connection to the third electronic device and a potential produced when the first electronic device is connected through the wired connection to an electronic device different in type from the third electronic device is unidentifiable.

(Configuration 10) In any of Configurations 1 to 9, the first electronic device may transmit or receive a first command to or from the third electronic device in order to specify transmission or reception of the device information of the third electronic device, and obtain the device information of the third electronic device by transmitting or receiving a second command to or from the third electronic device.

(Configuration 11) An exemplary embodiment provides an electronic device configured to connect through a wired connection to another electronic device, the electronic device including a determination unit that obtains a potential produced when the electronic device is connected through the wired connection to the another electronic device and to determine a type of the another electronic device based on the obtained potential, a processing unit that prepares data including device information of the electronic device based on determination that the another electronic device is a specific electronic device and a request from the specific electronic device, and a communication unit that starts communication with the specific electronic device after preparation of the data is completed and transmits the device information of the electronic device to the specific electronic device.

(Configuration 12) An exemplary embodiment provides a method. The method includes obtaining, at a first electronic device, a potential produced when the first electronic device is connected through a wired connection to another electronic device and determining, at the first electronic device, a type of the another electronic device based on the obtained potential, preparing, at the first electronic device, data including device information of the first electronic device based on determination that the another electronic device is a second electronic device and a request from the second electronic device, starting, at the first electronic device, communication with the second electronic device after preparation of the data is completed and transmitting, at the first electronic device, the device information of the first electronic device to the second electronic device, and performing, at the second electronic device, processing based on the device information of the first electronic device.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows an exemplary illustrative non-limiting drawing illustrating an exemplary configuration of a communication system according to the present embodiment.
Fig. 2 shows an exemplary illustrative non-limiting drawing illustrating an exemplary hardware configuration of a controller according to the present embodiment.
Fig. 3 shows an exemplary illustrative non-limiting drawing illustrating an exemplary hardware configuration of a main body apparatus according to the present embodiment.
Fig. 4 shows an exemplary illustrative non-limiting drawing illustrating a state in which the controller according to the present embodiment has been attached to the main body apparatus.
Fig. 5 shows an exemplary illustrative non-limiting drawing illustrating exemplary communication processing when the controller according to the present embodiment is attached to the main body apparatus.
Fig. 6 shows an exemplary illustrative non-limiting drawing illustrating a communication flow in one cycle of the communication system according to the present embodiment.
Fig. 7 shows an exemplary illustrative non-limiting drawing illustrating a modification of the communication processing when the controller according to the present embodiment is attached to the main body apparatus.
Fig. 8 shows an exemplary illustrative non-limiting drawing illustrating exemplary display processing in the main body apparatus according to the present embodiment.
Fig. 9 shows an exemplary illustrative non-limiting drawing illustrating another exemplary configuration of the communication system according to the present embodiment.
Fig. 10 shows an exemplary illustrative non-limiting drawing illustrating an exemplary hardware configuration of an attachment according to the present embodiment.
Fig. 11 shows an exemplary illustrative non-limiting drawing illustrating a state in which the controller according to the present embodiment has been attached to the attachment.

### DETAILED DESCRIPTION

The present embodiment will be described in detail with reference to the drawings. The same or corresponding elements in the drawings have the same reference characters allotted and description thereof will not be repeated.

### [A. Exemplary Configuration of Communication System]

An exemplary configuration of a communication system according to the present embodiment will initially be described. Though an application to a game system will be described below, the technical concept of the present disclosure is applicable to any electronic device.

The game system includes one or more controllers. The controller is an exemplary electronic device. The controller is configured to connect through a wired connection to one or more other electronic devices.

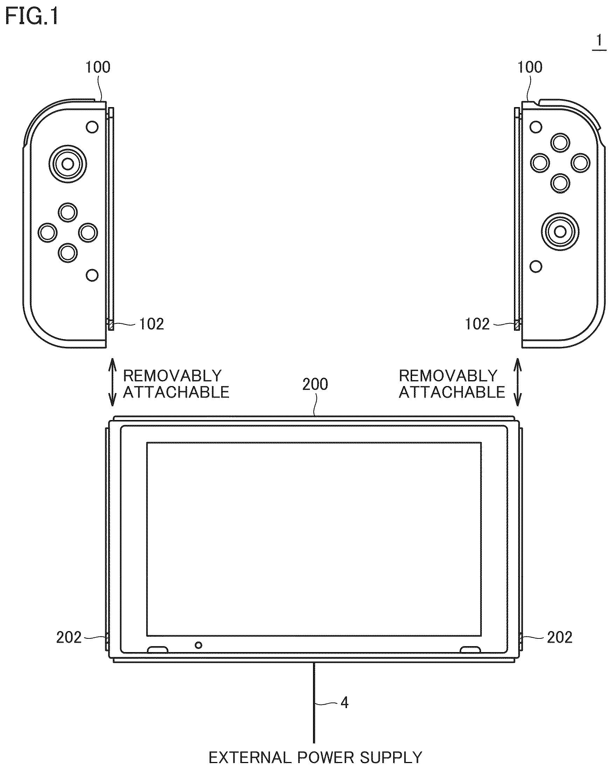

An exemplary configuration of a communication system 1 according to the present embodiment will be described with reference to Fig. 1. Communication system 1 includes a main body apparatus 200 which is another exemplary electronic device, in addition to one or more controllers 100. Two controllers 100 are each removably attachable to main body apparatus 200. Main body apparatus 200 is configured to connect through the wired connection to one or more controllers 100. As controller 100 is attached to main body apparatus 200, controller 100 and main body apparatus 200 are connected to each other through the wired connection.

Controller 100 includes a connector 102 including one or more terminals. As controller 100 is attached to main body apparatus 200, the one or more terminals of connector 102 of controller 100 are electrically connected to respective corresponding terminals of a connector 202 of main body apparatus 200. Controller 100 is connected to main body apparatus 200 through a wired connection established via connector 102 and connector 202.

Controller 100 includes a user-operable portion such as a button, a switch, and/or a stick and transmits a signal indicating details of an operation on the user-operable portion by a user to main body apparatus 200. Controller 100 may include an actuator such as a vibration motor. Controller 100 has the actuator driven in accordance with a signal from main body apparatus 200.

Controller 100 may include a battery. Electric power for charging the battery of controller 100 may be supplied from main body apparatus 200 as a result of attachment of controller 100 to main body apparatus 200.

Connector 102 of controller 100 may be used for wired communication with another electronic device or for supply of electric power from another electronic device. In an example where connector 102 includes a plurality of terminals, at least one of the plurality of terminals may be used for wired communication and at least another one of them may be used for supply of electric power.

### [B. Exemplary Hardware Configuration]

An exemplary hardware configuration of an electronic device included in communication system 1 according to the present embodiment will now be described.

### (b1: Controller 100)

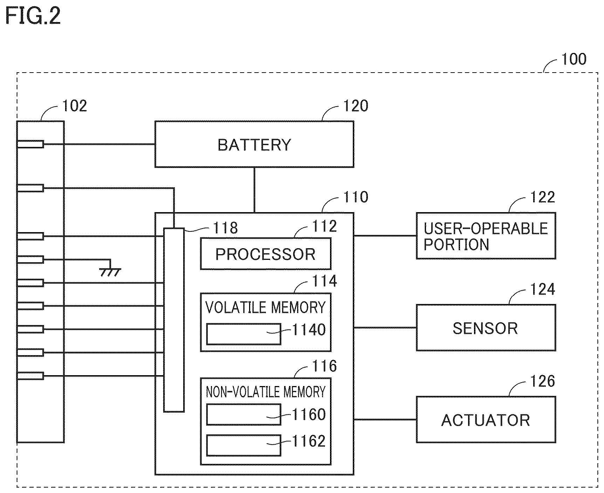

An exemplary hardware configuration of controller 100 according to the present embodiment will be described with reference to Fig. 2. For the sake of convenience of description, Fig. 2 shows only a main part of controller 100.

Controller 100 includes control circuitry 110, a battery 120, a user-operable portion 122, a sensor 124, and an actuator 126.

Control circuitry 110 performs processing necessary in controller 100. Control circuitry 110 includes a processor 112, a volatile memory 114, a non-volatile memory 116, and interface circuitry 118.

Processor 112 sequentially develops a necessary program among programs stored in non-volatile memory 116 or the like on volatile memory 114 and executes the same. Volatile memory 114 may be, for example, a dynamic random access memory (DRAM), a static random access memory (SRAM), or the like. Non-volatile memory 116 may be, for example, a flash memory, an electrically erasable programmable read-only memory (EEPROM), or the like.

An area of a buffer 1140 for transmission and/or reception which will be described later may be provided in volatile memory 114.

A system program 1160 and device information 1162 may be stored in non-volatile memory 116. System program 1160 may be stored in a flash memory. Device information 162 may be stored in the EEPROM. Device information 1162 includes, for example, model information, a product number, a color of an appearance, a serial number, or the like of controller 100.

Processing in controller 100 as will be described later is performed, for example, by execution of system program 1160 by processor 112.

Interface circuitry 118 is responsible for exchange of a signal with an electronic device connected through connector 102. Interface circuitry 118 may support a plurality of communication schemes.

Control circuitry 110 may be implemented on a single substrate or may be configured with a combination of a plurality of substrates.

Battery 120 supplies electric power to each component of controller 100. Battery 120 may be charged with electric power supplied through connector 102.

User-operable portion 122 outputs a signal indicating a user operation to control circuitry 110. Sensor 124 outputs a signal indicating a behavior or the like of controller 100 to control circuitry 110. Actuator 126 provides a tactile stimulus or the like to the user in accordance with a signal from control circuitry 110.

Controller 100 may include not-shown circuitry for wireless communication with another electronic device.

### (b2: Main Body Apparatus 200)

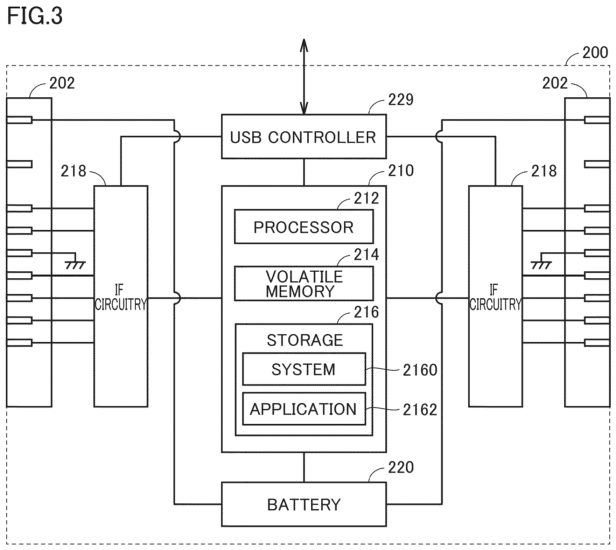

An exemplary hardware configuration of main body apparatus 200 according to the present embodiment will be described with reference to Fig. 3. For the sake of convenience of description, Fig. 3 shows only a main part of main body apparatus 200.

Main body apparatus 200 includes control circuitry 210, interface circuitry 218, a battery 220, and a universal serial bus (USB) controller 229. Main body apparatus 200 may further include a display or the like.

Control circuitry 210 performs processing necessary in main body apparatus 200. Control circuitry 210 includes a processor 212, a volatile memory 214, and a storage 216. Processor 212 and volatile memory 214 are similar to processor 112 and volatile memory 114 described above.

Storage 216 may be, for example, a flash memory, a hard disk drive (HDD), or the like. A system program 2160 and an application program 2162 may be stored in storage 216.

Interface circuitry 218 is responsible for exchange of a signal with an electronic device connected through connector 202. Interface circuitry 218 may support a plurality of communication schemes. Main body apparatus 200 includes two sets of interface circuitry 218 and connector 202. Two pieces of interface circuitry 218 may be able to operate independently of each other.

Battery 220 supplies electric power to each component of main body apparatus 200. Battery 220 may supply electric power to an electronic device connected through connector 202 or may be charged with electric power supplied from an external power supply.

USB controller 229 is responsible for exchange of a signal with a USB-connected electronic device. USB controller 229 can also exchange electric power through USB connection.

### [C. Exemplary Communication Processing]

Exemplary communication processing when controller 100 is attached to main body apparatus 200 will now be described. Though two controllers 100 are configured to be attached to main body apparatus 200 shown in Fig. 1, exemplary communication processing in an example where a single controller 100 is attached to main body apparatus 200 will be described for the sake of convenience of description. Exemplary communication processing in an example where another controller 100 is attached to main body apparatus 200 is also similar.

In the present embodiment, as controller 100 is attached to main body apparatus 200, communication via inter integrated circuit (I2C) is started between controller 100 and main body apparatus 200.

I2C is a serial bus communication scheme using two signal lines. The two signal lines include a serial clock line (SCL) and a serial data line (SDA). Through the two signal lines, data can bidirectionally be transmitted.

Controller 100 and main body apparatus 200 may start communication via USB therebetween. In general, a time period necessary for starting communication via I2C is shorter than a time period necessary for starting communication via USB. A rate of communication (for example, 3.4 Mbps at the maximum) via I2C, on the other hand, is lower than a rate of communication (for example, not lower than 12 Mbps) via USB. Therefore, immediately after attachment of controller 100 to main body apparatus 200, communication via I2C may mainly be used and thereafter communication via USB may mainly be used.

In communication via I2C, main body apparatus 200 operates as a master and controller 100 operates as a slave.

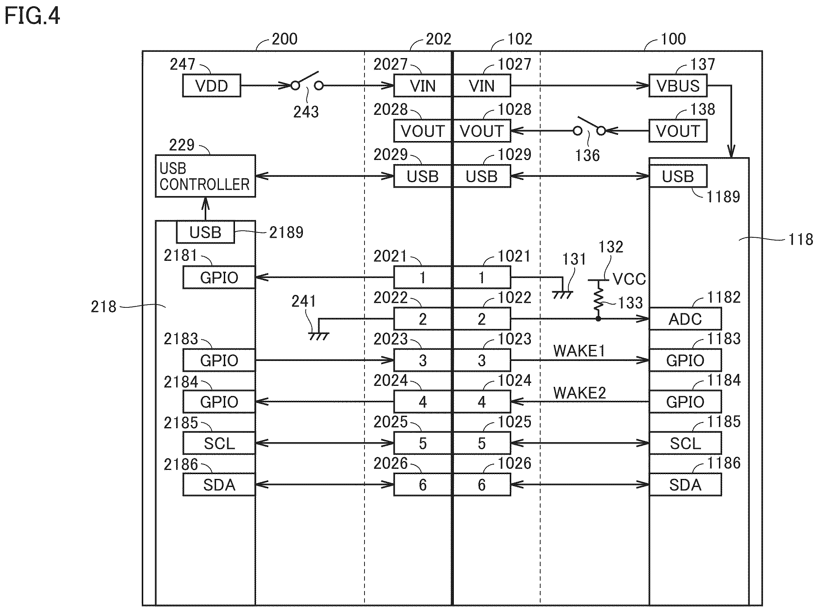

An exemplary state in which controller 100 according to the present embodiment has been attached to main body apparatus 200 will be described with reference to Fig. 4.

Connector 102 of controller 100 includes T1 to T6 terminals 1021 to 1026, a power supply input terminal 1027, a power supply output terminal 1028, and a USB terminal 1029.

Interface circuitry 118 of controller 100 includes an analog-digital converter (ADC) port 1182, general purpose input output (GPIO) ports 1183 and 1184, communication ports 1185 and 1186, and a USB port 1189.

T2 terminal 1022 is used for specifying an electronic device to which controller 100 is attached. T2 terminal 1022 is electrically connected to ADC port 1182 of interface circuitry 118. A line that electrically connects T2 terminal 1022 and ADC port 1182 to each other is electrically connected to a power supply potential 132 with a resistor 133 being interposed. T2 terminal 1022 is thus maintained at power supply potential 132 of controller 100 while it is not electrically connected to another terminal. ADC port 1182 samples an analog input (for example, a potential) and converts the analog input to a digital signal. ADC port 1182 obtains the potential of an inputted signal. ADC port 1182 may have, for example, a resolution of eight levels. For example, in an example where an input range of ADC port 1182 is from 0 to 5 V, in accordance with in which of sections delimited every 0.625 V (5 V/8 levels) the inputted signal is included, determination as one of 0 to 7 digital values is made.

ADC port 1182 (or control circuitry 110) obtains the potential produced upon wired connection of controller 100 to another electronic device. T2 terminal 1022 may be used for forming an electrical path for ADC port 1182 (or control circuitry 110) to obtain the potential. Circuitry of another electronic device (for example, main body apparatus 200) to which controller 100 is to be attached may be designed such that the potential (or the level value) obtained by ADC port 1182 has a value different depending on attached another electronic device. Controller 100 may be attached to an electronic device other than main body apparatus 200.

The "potential" obtained by ADC port 1182 can also be read as a "voltage (or potential difference) with a ground potential of controller 100 being defined as the reference."

T1 terminal 1021 is electrically connected to a ground potential 131 of controller 100. The potential of T1 terminal 1021 is thus maintained at ground potential 131 of controller 100. T1 terminal 1021 may be used for forming another electrical path for another electronic device to obtain the potential in a case of wired connection of controller 100 to that another electronic device. For example, a GPIO port 2181 (or control circuitry 210) of main body apparatus 200 may obtain the potential caused in the electrical path including T1 terminal 1021.

T3 terminal 1023 and T4 terminal 1024 are electrically connected to GPIO port 1183 and GPIO port 1184, respectively. GPIO ports 1183 and 1184 can function as any of an input port configured to accept a signal from another electronic device and an output port configured to output a signal to another electronic device, in accordance with setting or the like. For example, GPIO ports 1183 and 1184 receive input or provide output of binary values of Low (which will also be abbreviated as "L" below) and High (which will also be abbreviated as "H" below).

In communication via I2C, T3 terminal 1023 and GPIO port 1183 accept a request signal from another electronic device. For example, an H signal indicates presence of the request and an L signal indicates absence of the request.

In communication via I2C, T4 terminal 1024 and GPIO port 1184 output a signal indicating a state to another electronic device. For example, an H signal indicates a communication-enabled state and an L signal indicates a communication-disabled state.

T5 terminal 1025 and T6 terminal 1026 are electrically connected to communication port 1185 and communication port 1186, respectively.

In communication via I2C, the serial clock line is formed through a path via communication port 1185, T5 terminal 1025, T5 terminal 2025, and communication port 2185. The serial data line is formed through a path via communication port 1186, T6 terminal 1026, T6 terminal 2026, and communication port 2186.

Control circuitry 110 of controller 100 thus transmits and/or receives the request and state signals through T4 terminal 1024 and T3 terminal 1023 and transmits and/or receives the signal adapted to communication via I2C through T5 terminal 1025 and T6 terminal 1026.

In I2C communication, by using GPIO ports 1183 and 1184 to transmit and/or receive the request and state signals, a clock stretch function in I2C communication may be performed. For example, controller 100 that operates as the slave may transmit the signal indicating the communication-enabled state after data to be transmitted and/or received to and/or from main body apparatus 200 is ready. When main body apparatus 200 that operates as the master receives the signal indicating the communication-disabled state, it suspends data transmission through the serial clock line. Such a situation that data is not ready in controller 100 by the timing requested by another electronic device (main body apparatus 200 in this example) can thus be avoided.

Power supply input terminal 1027 is used for reception of supply of electric power from another electronic device. Power supply input terminal 1027 is electrically connected to interface circuitry 118 through a power supply bus 137.

Power supply output terminal 1028 is used for supply of electric power to another electronic device. Power supply output terminal 1028 is electrically connected to a power supply output 138 of controller 100. Power supply output 138 is electrically connected to battery 120 (see Fig. 2) of controller 100. A switch 136 is provided at a line between power supply output 138 and power supply output terminal 1028. Switch 136 can electrically disconnect power supply output 138 and power supply output terminal 1028 from each other.

USB port 1189 is an interface for USB connection to another electronic device. USB terminal 1029 is electrically connected to USB port 1189. USB terminal 1029 may include a plurality of terminals.

Connector 202 of main body apparatus 200, on the other hand, includes T1 to T6 terminals 2021 to 2026, a power supply output terminal 2027, a power supply input terminal 2028, and a USB terminal 2029.

Interface circuitry 218 of main body apparatus 200 includes GPIO ports 2181, 2183, and 2184, communication ports 2185 and 2186, and a USB port 2189.

T1 terminal 2021 is used for specifying an electronic device attached to main body apparatus 200. T1 terminal 2021 is electrically connected to GPIO port 2181 of interface circuitry 218.

T2 terminal 2022 is electrically connected to a ground potential 241 of main body apparatus 200. A potential at T2 terminal 2022 is thus maintained at ground potential 241 of main body apparatus 200.

T3 terminal 2023 and T4 terminal 2024 are electrically connected to GPIO port 2183 and GPIO port 2184, respectively.

T5 terminal 2025 and T6 terminal 2026 are electrically connected to communication port 2185 and communication port 2186, respectively. Communication ports 2185 and 2186 accept a signal in accordance with a selected communication scheme and output a signal in accordance with the selected communication scheme.

Power supply output terminal 2027 is used for supply of electric power to another electronic device. Power supply output terminal 2027 is electrically connected to a power supply output 247 of main body apparatus 200. Power supply output 247 is electrically connected to battery 220 (see Fig. 3) of main body apparatus 200. A switch 243 is provided at a line between power supply output 247 and power supply output terminal 2027. Switch 243 can electrically disconnect power supply output 247 and power supply output terminal 2027 from each other.

In an example where controller 100 is attached to main body apparatus 200, controller 100 is supplied with electric power from main body apparatus 200, and hence electric power is not supplied to another electronic device via power supply output terminal 1028.

USB port 2189 is electrically connected to USB controller 229. USB terminal 2029 is electrically connected to USB controller 229. USB terminal 2029 may include a plurality of terminals. USB controller 229 may function as a USB hub for an electronic device to be connected to main body apparatus 200 and an electronic device to be USB-connected through USB terminal 2029.

Exemplary communication processing when controller 100 is attached to main body apparatus 200 will be described below.

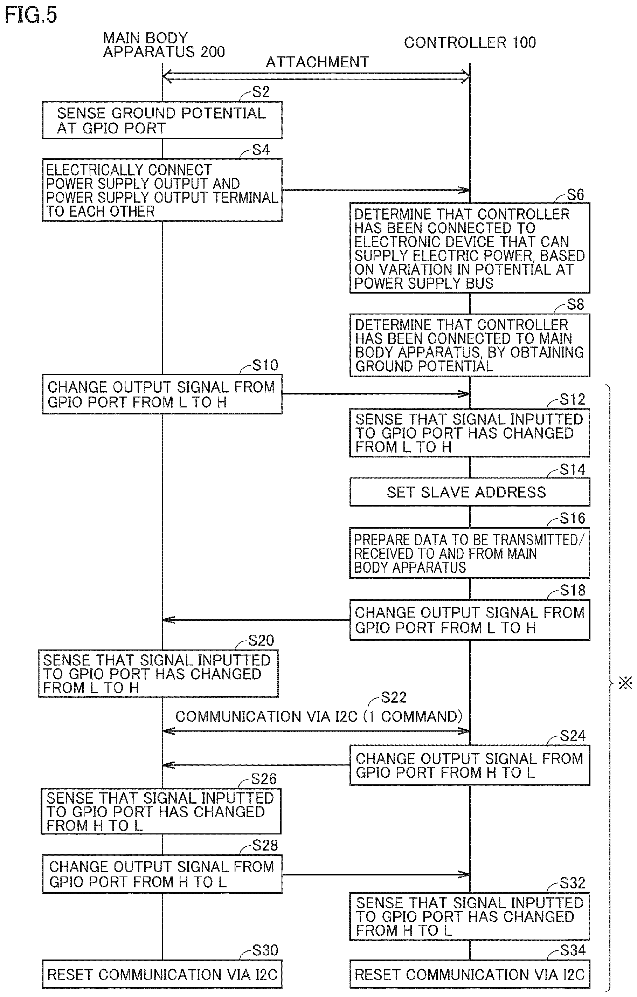

Exemplary communication processing when controller 100 according to the present embodiment is attached to main body apparatus 200 will be described with reference to Fig. 5. In main body apparatus 200, GPIO port 2183 is set as the output port and GPIO port 2184 is set as the input port.

As controller 100 is attached to main body apparatus 200, T1 terminal 1021 of controller 100 and T1 terminal 2021 of main body apparatus 200 are electrically connected to each other, and therefore GPIO port 2181 of main body apparatus 200 senses ground potential 131 (that is, L) (step S2).

Based on sensing of ground potential 131 by GPIO port 2181, main body apparatus 200 determines that it has been connected through the wired connection to controller 100. In succession, main body apparatus 200 closes switch 243. Main body apparatus 200 thus electrically connects power supply output 247 and power supply output terminal 2027 to each other (step S4).

Based on production of the potential of power supply output 247 at power supply bus 137, controller 100 determines that it has been connected to an electronic device that can supply electric power (in this example, main body apparatus 200) (step S6). When there is an electronic device that can supply electric power other than main body apparatus 200, controller 100 is unable to confirm connection thereof to main body apparatus 200.

Since T2 terminal 1022 of controller 100 and T2 terminal 2022 of main body apparatus 200 are electrically connected to each other, an electrical path is formed between power supply potential 132 of controller 100 and ground potential 241 of main body apparatus 200. The potential produced in this path is obtained . Since most of voltage lowering from power supply potential 132 to ground potential 241 occurs in resistor 133, ADC port 1182 of controller 100 obtains ground potential 241.

Based on obtainment of ground potential 241 by ADC port 1182, controller 100 determines that it has been connected to main body apparatus 200 (step S8). When controller 100 is attached to an electronic device other than main body apparatus 200, the potential obtained at ADC port 1182 will be different. Controller 100 thus determines a type of the electronic device connected thereto through the wired connection based on the obtained potential.

Through processing above, controller 100 and main body apparatus 200 specify to which they are connected.

Main body apparatus 200 changes an output signal (W AKE1 shown in Fig. 4) from GPIO port 2183 from L to H (step S10). In this example, the output signal from GPIO port 2183 is used as a request for transmission and/or reception preparation from main body apparatus 200 to controller 100.

When GPIO port 1183 senses change from L to H (step S12), controller 100 sets a slave address thereof (step S14). In other words, controller 100 determines the address thereof.

In succession, controller 100 prepares data to be transmitted and/or received to and/or from main body apparatus 200 (step S16). In the present embodiment, data prepared in accordance with a request for transmission and/or reception preparation from main body apparatus 200 is predetermined in accordance with a type of the electronic device connected through the wired connection. In an example where controller 100 is connected through the wired connection to main body apparatus 200, controller 100 prepares data such that main body apparatus 200 can obtain device information 1162.

More specifically, controller 100 initializes buffer 1140 and prepares buffer 1140 having a size large enough to store therein, data to be transmitted and/or received. Controller 100 reads device information 1162 stored in non-volatile memory 116, generates data for transmitting read device information 1162 to main body apparatus 200, and has the data stored in buffer 1140. Generated data may be a command to be transmitted and/or received in communication via I2C.

The command may be given for performing at least one of processing for transmission of device information 1162 from controller 100 to main body apparatus 200 or processing for reading of device information 1162 from controller 100 by main body apparatus 200.

Controller 100 thus prepares data including device information 1162 thereof based on determination that the electronic device connected through the wired connection is main body apparatus 200 and the request from main body apparatus 200.

In succession, controller 100 changes an output signal (WAKE2 shown in Fig. 4) from GPIO port 1184 from L to H (step S18). In this example, the output signal from GPIO port 1184 is used as a notification of completion of transmission and/or reception preparation from controller 100 to main body apparatus 200.

When GPIO port 2184 senses change from L to H (step S20), main body apparatus 200 starts communication via I2C (step S22). Controller 100 thus notifies, after it prepares data, main body apparatus 200 of completion of preparation of the data. Communication between controller 100 and main body apparatus 200 is started after controller 100 has notified main body apparatus 200 of completion of preparation of the data.

In step S22, main body apparatus 200 that operates as the master transmits and/or receives one command to and/or from controller 100 to obtain device information 1162 of controller 100.

Controller 100 thus starts communication with main body apparatus 200 after it completes preparation of data, and transmits device information 1162 thereof to main body apparatus 200. A data format may be different between device information 1162 stored in non-volatile memory 116 of controller 100 and device information obtained by main body apparatus 200. The device information obtained by main body apparatus 200 may be a part of device information 1162 stored in non-volatile memory 116 of controller 100 or may be information obtained by addition of some information to device information 1162 stored in non-volatile memory 116 of controller 100.

As main body apparatus 200 completes obtainment of device information 1162, controller 100 changes the output signal from GPIO port 1184 from H to L (step S24). At this time point, the output signal from GPIO port 1184 may be used as a notification of completion of transmission of device information 1162 from controller 100 to main body apparatus 200. Alternatively, the output signal from GPIO port 1184 may indicate absence of data to be transmitted and/or received in controller 100.

As GPIO port 2184 senses change from H to L (step S26), main body apparatus 200 changes the output signal from GPIO port 2183 from H to L (step S28). At this time point, the output signal from GPIO port 2183 may be used as a notification of completion of reception of data from controller 100 to main body apparatus 200. Main body apparatus 200 then resets communication via I2C (step S30).

When GPIO port 1183 senses change from H to L (step S32), on the other hand, controller 100 resets communication via I2C (step S34).

Through communication processing above, communication in one cycle is completed. A series of processing in steps S10 to S34 may be repeated each time communication via I2C is performed.

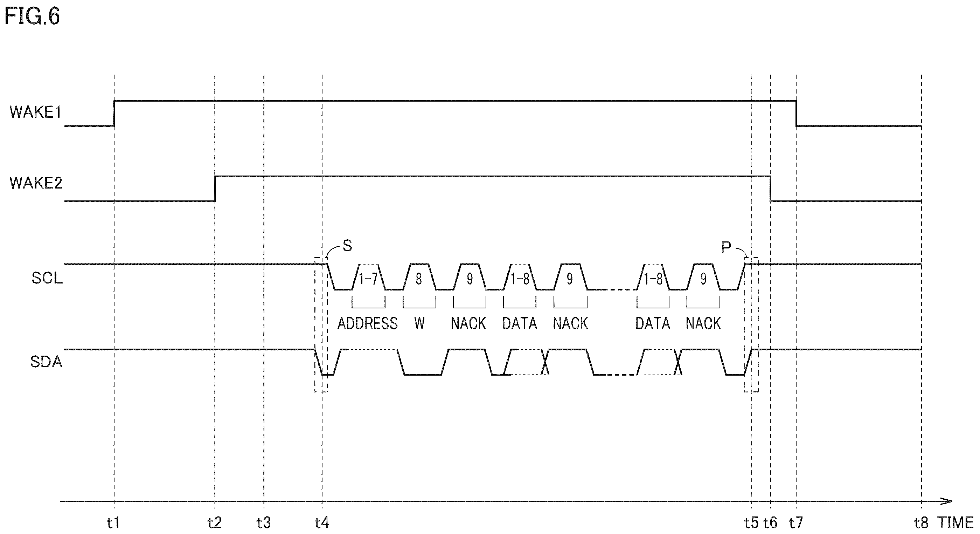

An exemplary communication flow in one cycle of the communication system according to the present embodiment will be described with reference to Fig. 6. Fig. 6 shows a signal (WAKE1 shown in Fig. 4) outputted from GPIO port 2183 of main body apparatus 200 to controller 100, a signal (WAKE2 shown in Fig. 4) outputted from GPIO port 1184 of controller 100 to main body apparatus 200, a signal that appears at the serial clock line (SCL) between communication port 1185 and communication port 2185, and a signal that appears at the serial data line (SDA) between communication port 1186 and communication port 2186.

At time t1, main body apparatus 200 changes the output signal (WAKE1) from GPIO port 2183 from L to H (step S10 in Fig. 5). During a period from time t1 to time t2, controller 100 sets a slave address thereof and prepares data to be transmitted to main body apparatus 200 (steps S14 and S16 in Fig. 5).

At time t2, controller 100 changes the output signal (WAKE2) from GPIO port 1184 from L to H (step S18 in Fig. 5).

When main body apparatus 200 confirms at time t3 that WAKE 1 is at H and WAKE2 is at H, it starts communication via I2C at time t4. More specifically, transmission and/or reception of a command between main body apparatus 200 that operates as the master and controller 100 that operates as the slave is started.

The command is transmitted and/or received between main body apparatus 200 and controller 100 during a period from time t4 to time t5. At time t4, controller 100 generates a signal value at the serial clock line and a signal value at the serial data line corresponding to a start condition S. At time t5, controller 100 generates a signal value at the serial clock line and a signal value at the serial data line corresponding to a stop condition P.

At time t6, controller 100 changes the output signal (WAKE2) from GPIO port 1184 from H to L (step S24 in Fig. 5). At time t7, main body apparatus 200 changes the output signal from GPIO port 2183 from H to L (step S28 in Fig. 5).

When main body apparatus 200 confirms at time t7 that WAKE1 is at L and WAKE2 is at L, it resets communication via I2C. The above is one cycle of communication.

In the communication system according to the present embodiment, after the type of the electronic device is specified based on the potential obtained at ADC port 1182 of controller 100, the output signal (WAKE1) from GPIO port 2183 is used to request controller 100 to prepare for transmission and/or reception. Controller 100 can thus complete initialization of buffer 1140 and storage of data in buffer 1140 before start of communication via I2C. Therefore, main body apparatus 200 and controller 100 should only transmit and/or receive therebetween, one command for main body apparatus 200 to obtain device information 1162 of controller 100. A communication time period can thus be reduced.

Exemplary communication processing in an example where the output signal (WAKE1 shown in Fig. 4) from GPIO port 2183 of main body apparatus 200 is not used will now be described as a modification.

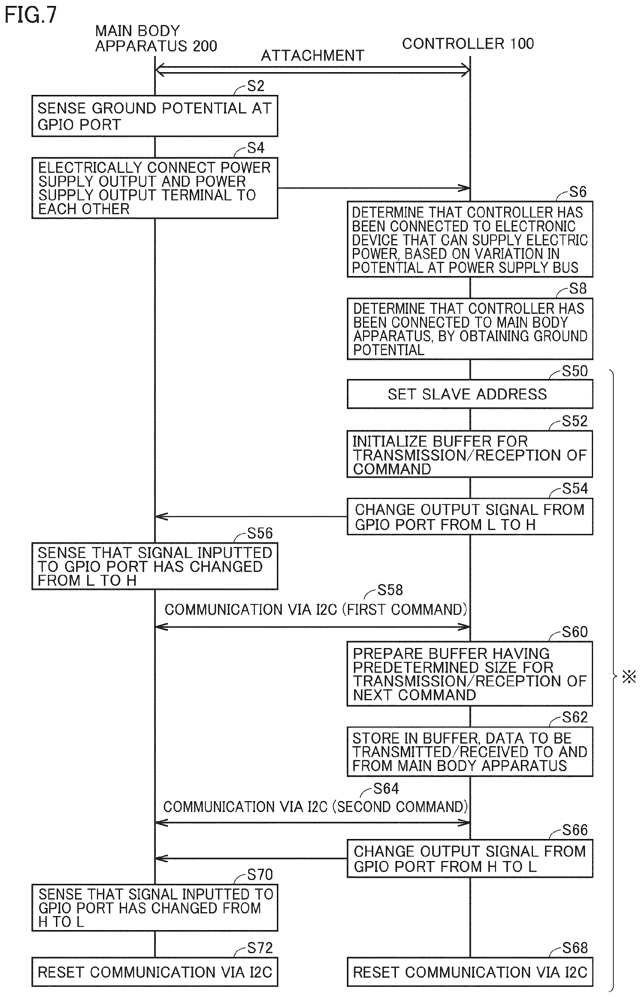

A modification of the communication processing when controller 100 according to the present embodiment is attached to main body apparatus 200 will be described with reference to Fig. 7.

As controller 100 is attached to main body apparatus 200, processing from steps S2 to S8 shown in Fig. 5 is performed. As a result of the processing in steps S2 to S8, controller 100 and main body apparatus 200 specify to which they are connected.

In succession, controller 100 sets the slave address thereof (step S50). In other words, controller 100 determines the address thereof. In succession, controller 100 initializes buffer 1140 for transmission and/or reception of a command (step S52).

At this time point, controller 100 is unable to determine what kind of command will be transmitted from main body apparatus 200 that operates as the master, and hence it prepares for reception of a command or a request for designating the command. For example, buffer 1140 having a size large enough to store a header command is prepared.

When controller 100 completes determination of the address and preparation of buffer 1140, it changes the output signal from GPIO port 1184 from L to H (step S54).

When GPIO port 2184 senses change from L to H (step S56), main body apparatus 200 starts communication via I2C. Main body apparatus 200 transmits and/or receives as a first command, a command for requesting device information 1162 (step S56). As a result of transmission and/or reception of the command to and/or from main body apparatus 200, controller 100 determines that main body apparatus 200 has requested device information 1162 (step S58). In succession, controller 100 clears current buffer 1140 and prepares buffer 1140 having a predetermined size for transmission and/or reception of a next command (step S60). Controller 100 then reads device information 1162 stored in non-volatile memory 116 and prepares data such that main body apparatus 200 can obtain device information 1162. Controller 100 has data to be transmitted and/or received to and/or from main body apparatus 200 stored in buffer 1140 (step S62).

In succession, main body apparatus 200 transmits and/or receives as a second command, a command for transmission of device information 1162 from controller 100 to main body apparatus 200 (step S64). The second command can also be defined as a command for allowing main body apparatus 200 to obtain device information 1162 of controller 100.

When main body apparatus 200 completes obtainment of device information 1162, controller 100 changes the output signal from GPIO port 1184 from H to L (step S66). Controller 100 then resets communication via I2C (step S68).

When GPIO port 2184 senses change from H to L (step S70), on the other hand, main body apparatus 200 resets communication via I2C (step S72).

In the modification described above, the output signal (WAKE1) from GPIO port 2183 is not used. Therefore, after the first command for specifying transmission of specific data (for example, device information 1162) is transmitted and/or received, subject data is prepared. In succession, as a result of transmission and/or reception of the second command, main body apparatus 200 obtains the subject data from controller 100. Since the two commands are thus transmitted and/or received, a communication time period longer than in the communication processing shown in Figs. 5 to 7 is required.

### [D. Exemplary Processing]

Exemplary processing based on device information 1162 of controller 100 obtained by main body apparatus 200 will now be described.

Main body apparatus 200 can perform any processing based on device information 1162 of controller 100. For example, main body apparatus 200 may perform display processing based on device information 1162 of controller 100.

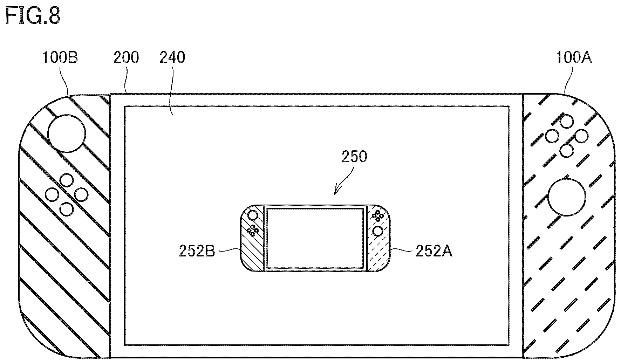

Exemplary display processing in main body apparatus 200 according to the present embodiment will be described with reference to Fig. 8. A controller 100A and a controller 100B are attached to main body apparatus 200. For distinction between two controllers 100, "A" and "B" are suffixed to reference characters.

In an example shown in Fig. 8, an image object 250 showing main body apparatus 200 itself is shown on a display 240 of main body apparatus 200. Together with image object 250, image objects 252A and 252B corresponding to respective controllers 100A and 100B attached to main body

For example, appearances of controller 100A and controller 100B have colors different from each other. Main body apparatus 200 obtains device information 1162 from controllers 100A and 100B in accordance with the communication processing described above. Specifically, main body apparatus 200 can obtain information such as the model information, the product number, the color of the appearance, or the serial number of attached controllers 100A and 100B.

Therefore, main body apparatus 200 can show on display 240, a manner of display of image object 252A corresponding to the appearance of controller 100A based on device information 1162 of controller 100A. Similarly, main body apparatus 200 can show on display 240, a manner of display of image object 252B corresponding to the appearance of controller 100B based on device information 1162 of controller 100B.

In an example where the appearance of controller 100 is different for each model, main body apparatus 200 may specify the model of attached controller 100 based on the model information included in obtained device information 1162 and then show the image object in accordance with the specified model.

For example, as shown in Fig. 8, controller 100A attached to a sheet plane right side of main body apparatus 200 and controller 100B attached to a sheet plane left side of main body apparatus 200 are different from each other in structure at the left and right sides. Device information 1162 of controller 100 may include information indicating to which side of main body apparatus 200 controller 100 is attached. Main body apparatus 200 may determine the manner of display of image object 252 based on such model information. For example, device information 1162 of controller 100 of a special specification may include information indicating the special specification. Main body apparatus 200 may show image object 252 that simulates controller 100 of the special specification based on such model information.

Main body apparatus 200 may make the manner of display of image object 252 different, depending on to which side thereof controller 100 is connected.

### [E. Example of Attachment to Another Electronic Device]

An example in which controller 100 is attached to another electronic device will now be described.

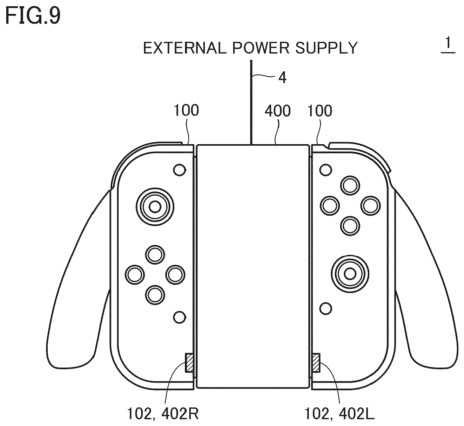

Another exemplary configuration of communication system 1 according to the present embodiment will be described with reference to Fig. 9. One or more controllers 100 may each removably be attachable to an attachment 400. Attachment 400 is another exemplary electronic device. Connector 102 of controller 100 is electrically connected to a connector 402L (or a connector 402R) of attachment 400. Connector 402L and connector 402R will also collectively be referred to as a "connector 402." Attachment 400 is configured to connect to controller 100 through a wired connection established via connector 102 and connector 402. Attachment 400 can also supply at least some of electric power supplied from an external power supply 4 to controller 100 via connector 102 and connector 402.

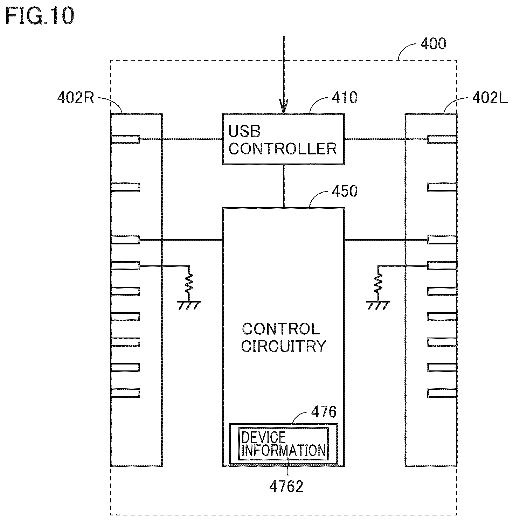

An exemplary hardware configuration of attachment 400 according to the present embodiment will be described with reference to Fig. 10. For the sake of convenience of description, Fig. 10 shows only a main part of attachment 400.

Attachment 400 includes a USB connector 410 and control circuitry 450.

USB controller 410 allows supply of electric power supplied through USB connection to an electronic device connected to connector 402.

Control circuitry 450 is responsible for processing for exchanging data with a USB-connected electronic device and processing for exchanging data with an electronic device connected via connector 402. For example, attachment 400 can also obtain a charged state of the electronic device connected via connector 402. By way of example, attachment 400 may be configured to communicate via I2C.

Control circuitry 450 includes a non-volatile memory 476. Non-volatile memory 476 is, for example, an EEPROM. Device information 4762 may be stored in non-volatile memory 476. Device information 4762 includes, for example, model information, a product number, a color of an appearance, a serial number, or the like of attachment 400.

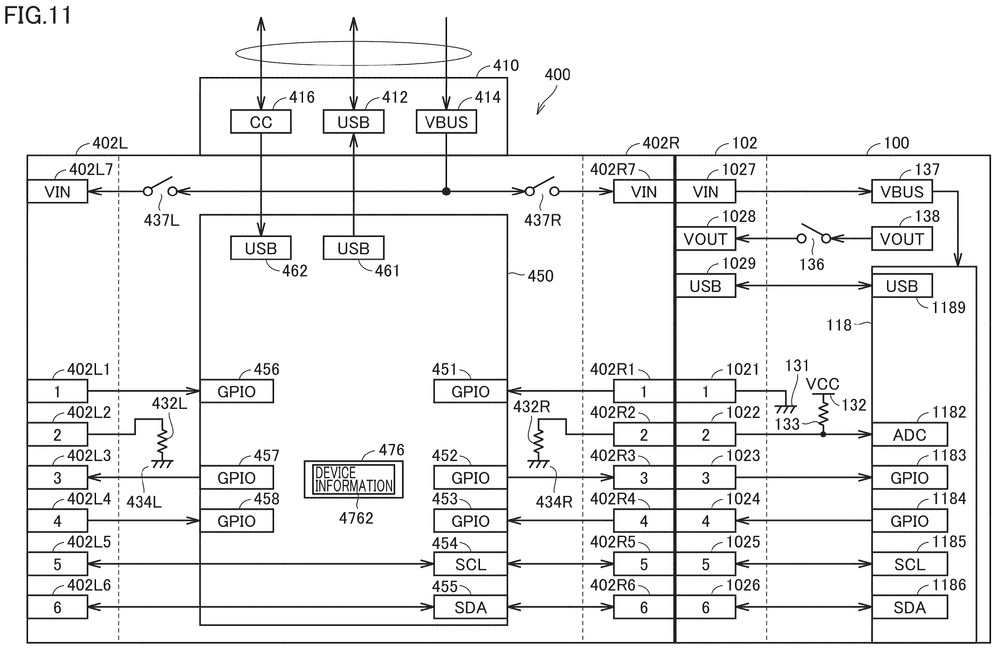

An exemplary state in which controller 100 according to the present embodiment has been attached to attachment 400 will be described with reference to Fig. 11. As controller 100 is attached to attachment 400, controller 100 may start communication via I2C with attachment 400.

Connector 402R of attachment 400 includes T1 to T6 terminals 402R1 to 402R6 and a power supply output terminal 402R7. Similarly, connector 402L of attachment 400 includes T1 to T6 terminals 402L1 to 402L6 and a power supply output terminal 402L7.

Control circuitry 450 includes GPIO ports 451, 452, 453, 456, 457, and 458, communication ports 454 and 455, and USB ports 461 and 462.

T1 terminal 402R1 is electrically connected to GPIO port 451. Similarly, T1 terminal 402L1 is electrically connected to GPIO port 456.

T2 terminal 402R2 is electrically connected to a ground potential 434R with a resistor 432R being interposed. Similarly T2 terminal 402L2 is electrically connected to a ground potential 434L with a resistor 432L being interposed.

T3 terminal 402R3 is electrically connected to GPIO port 452. Similarly, T3 terminal 402L3 is electrically connected to GPIO port 457.

T4 terminal 402R4 is electrically connected to GPIO port 453. Similarly, T4 terminal 402L4 is electrically connected to a GPIO port 458.

T5 terminal 402R5 and T5 terminal 402L5 are electrically connected to communication port 454. T6 terminal 402R6 and T6 terminal 402L6 are electrically connected to communication port 455.

Power supply output terminal 402R7 is electrically connected to a power supply bus 414 of USB controller 410 with a switch 437R being interposed. Similarly, power supply output terminal 402L7 is electrically connected to power supply bus 414 of USB controller 410 with a switch 437L being interposed.

USB port 461 of control circuitry 450 is electrically connected to USB port 412 of USB controller 410. USB port 462 of control circuitry 450 is electrically connected to a configuration channel (CC) port 416 of USB controller 410.

Exemplary processing when controller 100 is attached to attachment 400 will be described below. Though exemplary processing in an example where controller 100 is attached to a side of connector 402R of attachment 400 is described, processing is also similar in an example where controller 100 is attached to a side of connector 402L of attachment 400.

T1 terminal 1021 of controller 100 and T1 terminal 402R1 of attachment 400 are electrically connected to each other. As a result of this connection, GPIO port 451 senses ground potential 131 (that is, L). Attachment 400 determines that controller 100 has been attached to the side of connector 402R based on sensing of ground potential 131 by GPIO port 451. In succession, attachment 400 closes switch 437R. Supply of electric power to controller 100 is thus activated.

T2 terminal 1022 of controller 100 and T2 terminal 402R2 of attachment 400 are electrically connected to each other. As a result of this connection, an electrical path is formed between power supply potential 132 of controller 100 and ground potential 434R of attachment 400. The potential produced in this path is obtained. Since voltage lowering from power supply potential 132 to ground potential 434R is proportionally split between resistor 133 and resistor 432R, ADC port 1182 of controller 100 obtains the potential in accordance with resistor 133 and resistor 432R. As ADC port 1182 obtains the potential in accordance with resistor 133 and resistor 432R, controller 100 determines that it has been attached to attachment 400.

In succession, controller 100 sets communication ports 1185 and 1186 to an operation mode adapted to I2C. Controller 100 then changes the output signal from GPIO port 1184 from L to H.

When GPIO port 453 senses change from L to H, attachment 400 changes the output signal from GPIO port 452 from L to H.

When controller 100 is attached to the side of connector 402L of attachment 400, processing similar to the processing described above is performed. When GPIO port 458 senses change from L to H, attachment 400 then changes the output signal from GPIO port 457 from L to H.

When GPIO port 1183 senses change from H to L, controller 100 starts communication via I2C. At this time, control circuitry 110 of controller 100 transmits and/or receives the request and state signals through T3 terminal 1023 and T4 terminal 1024 and transmits and/or receives the signal adapted to communication via I2C through T5 terminal 1025 and T6 terminal 1026.

For example, controller 100 may obtain device information 4762 from attachment 400 through communication via I2C. Controller 100 may perform various types of processing based on device information 4762 obtained from attachment 400. For example, controller 100 may change capability in communication processing or charging processing in accordance with communication performance or charging performance of attached attachment 400.

In addition, attachment 400 may obtain device information 1162 from controller 100 through communication via I2C. Attachment 400 may provide obtained device information 1162 of controller 100 to another USB-connected electronic device (for example, main body apparatus 200).

The potential obtained by ADC port 1182 of controller 100 has a value that allows specifying a type of an electronic device to which controller 100 is attached. For example, a resistor 432R (or a resistor 432L) of attachment 400 may be designed to be different in resistance value from other electronic devices. Magnitude of each resistance value may be determined in accordance with the resolution (level) of ADC port 1182.

When there are many types of electronic devices to which controller 100 is to be attached as compared with the resolution of ADC port 1182, on the other hand, the type of the electronic device to which the controller is to be connected may be specified based on the potential obtained by ADC port 1182 of controller 100 and the device information obtained from the electronic device. For example, when ADC port 1182 is unable to distinguish between the potential produced when controller 100 is attached to attachment 400 and the potential produced when controller 100 is attached to an electronic device different from attachment 400, controller 100 may determine that the type of the electronic device to which it has been connected is attachment 400 based on device information 4762 obtained from attachment 400. Controller 100 may determine that it has been connected through the wired connection to attachment 400, based on the fact that obtained device information 4762 indicates a specific value. Alternatively, when a different electronic device does not have device information stored therein, controller 100 may determine that it has been connected through the wired connection to attachment 400 based on the fact that it can obtain device information 4762.

For communication via I2C between controller 100 and attachment 400, the communication processing shown in Fig. 5 may be performed or the communication processing shown in Fig. 7 may be performed. For example, in an example where the communication processing shown in Fig. 7 is performed, controller 100 transmits and/or receives to and/or from attachment 400, a command for specifying transmission and/or reception of device information of attachment 400, as the first command (step S56 in Fig. 7). Attachment 400 prepares data such that controller 100 can obtain device information 4762 in accordance with the first command. In succession, controller 100 obtains device information 4762 of attachment 400 by transmission and/or reception of the second command (step S64 in Fig. 7) to and/or from attachment 400.

### [F. Modification]

Processing necessary in the electronic device described above may be performed by execution of a program by a processor, or a part or the entirety of the processing may be performed by hard-wired circuitry such as an application specific integrated circuit (ASIC) or a field programmable gate array (FPGA). Therefore, the term "processor" herein encompasses also hard-wired circuitry such as an ASIC or an FPGA in addition to a central processing unit (CPU), a micro processing unit (MPU), a graphics processing unit (GPU), or the like. The hard-wired circuitry may be an integrated circuit (IC) small in circuit scale.

### [G. Advantages]

In the communication system according to the present embodiment, when controller 100 determines that it has been connected through the wired connection to main body apparatus 200, it prepares data for transmission of device information 1162 to main body apparatus 200 in accordance with the request for transmission and/or reception preparation from main body apparatus 200. Since transmission of device information 1162 to main body apparatus 200 has been predetermined in controller 100, data to be transmitted and/or received in communication via I2C is prepared before start of communication via I2C between controller 100 and main body apparatus 200. By adopting such a scheme, the number of commands to be transmitted and/or received in communication via I2C can be made smaller. Consequently, main body apparatus 200 can achieve reduction in communication time period for obtaining device information 1162 of controller 100. In addition, main body apparatus 200 can show the image object or the like based on device information 1162 of controller 100 earlier.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. A communication system (1) comprising:
a first electronic device (100) configured to connect through a wired connection to another electronic device; and
a second electronic device (200) configured to connect through a wired connection to the first electronic device, wherein
the first electronic device comprises
a determination unit (1182, 100) configured to obtain a potential produced when the first electronic device is connected through the wired connection to the another electronic device and to determine a type of the another electronic device based on the obtained potential,
a processing unit (100) configured to prepare data comprising device information (1162) of the first electronic device based on determination that the another electronic device is the second electronic device and a request from the second electronic device, and
a communication unit (118, 100) configured to start communication with the second electronic device after preparation of the data is completed and to transmit the device information of the first electronic device to the second electronic device, and
the second electronic device is configured to perform processing based on the device information of the first electronic device.

2. The communication system according to claim 1, wherein
the first electronic device is configured to notify, after preparation of the data, the second electronic device of completion of the preparation of the data, and
communication between the first electronic device and the second electronic device is started after the first electronic device has notified the second electronic device of completion of the preparation of the data.

3. The communication system according to claim 1 or 2, wherein
the first electronic device and the second electronic device are configured to transmit or receive a signal adapted to communication via inter integrated circuit (I2C) through two signal lines.

4. The communication system according to claim 3, wherein
the second electronic device is configured to obtain the device information of the first electronic device by transmitting or receiving one command to or from the first electronic device.

5. The communication system according to any of claims 1 to 4, wherein
the processing based on the device information of the first electronic device comprises display processing based on the device information of the first electronic device.

6. The communication system according to any of claims 1 to 5, wherein
the first electronic device is a controller (100),
the second electronic device is a main body apparatus (200) to which the controller is configured to be attached, and
the device information of the first electronic device comprises information indicating a color of an appearance of the controller.

7. The communication system according to claim 6, wherein
the device information of the first electronic device comprises identification information of the controller, and
the second electronic device is configured to show an image object (250) corresponding to the appearance of the first electronic device based on the device information of the first electronic device.

8. The communication system according to any of claims 1 to 7, further comprising a third electronic device (400) configured to connect through a wired connection to the first electronic device, wherein
device information (4762) of the third electronic device is stored in the third electronic device, and
the first electronic device is configured to obtain the device information of the third electronic device.

9. The communication system according to claim 8, wherein
the first electronic device is configured to determine that the first electronic device is connected to the third electronic device based on obtainment of the device information of the third electronic device when a difference between a potential produced when the first electronic device is connected through the wired connection to the third electronic device and a potential produced when the first electronic device is connected through the wired connection to an electronic device different in type from the third electronic device is unidentifiable.

10. The communication system according to claim 9, wherein
the first electronic device is configured to
transmit or receive a first command to or from the third electronic device in order to specify transmission or reception of the device information of the third electronic device, and
obtain the device information of the third electronic device by transmitting or receiving a second command to or from the third electronic device.

11. An electronic device (100) configured to connect through a wired connection to another electronic device in the communication system (1) according to any of claims 1 to 10, the electronic device comprising:
a determination unit (1182, 100) configured to obtain a potential produced when the electronic device is connected through the wired connection to the another electronic device and to determine a type of the another electronic device based on the obtained potential;
a processing unit (100) configured to prepare data comprising device information (1162) of the electronic device based on determination that the another electronic device is a specific electronic device and a request from the specific electronic device; and
a communication unit (118, 100) configured to start communication with the specific electronic device after preparation of the data is completed and to transmit the device information of the electronic device to the specific electronic device.

12. A method comprising:
obtaining, at a first electronic device, a potential produced when the first electronic device is connected through a wired connection to another electronic device and determining, at the first electronic device, a type of the another electronic device based on the obtained potential (S6, S8);
preparing, at the first electronic device, data comprising device information of the first electronic device based on determination that the another electronic device is a second electronic device and a request from the second electronic device (S16; S60);
starting, at the first electronic device, communication with the second electronic device after preparation of the data is completed and transmitting, at the first electronic device, the device information of the first electronic device to the second electronic device (S22; S64); and
performing, at the second electronic device, processing based on the device information of the first electronic device.
